# EUROPEAN PATENT SPECIFICATION

(11) **EP 2 381 347 B1**
(45) Date of publication and mention of the grant of the patent: **11.07.2018**
(21) Application number: 10004407.2
(22) Date of filing: 26.04.2010
(51) Int. Cl.: G06F 3/0488

(54) **METHOD FOR DISPLAYING AN OBJECT HAVING A PREDETERMINED INFORMATION CONTENT ON A TOUCH SCREEN**
VERFAHREN ZUR ANZEIGE EINES OBJEKTS MIT EINEM VORHER FESTGELEGTEN INFORMATIONSINHALT AUF EINEM BERÜHRUNGSBILDSCHIRM
PROCÉDÉ D'AFFICHAGE D'UN OBJET DOTÉ D'UN CONTENU D'INFORMATIONS PRÉDÉTERMINÉES SUR UN ÉCRAN TACTILE

(43) Date of publication of application: 26.10.2011
(73) Proprietor: Sony Mobile Communications Inc., Shinagawa-ku Tokyo 140-0002 (JP)
(72) Inventor: Johansson, Fredrik, 211 12 Malmö (SE)
(74) Representative: Banzer, Hans-Jörg

(56) References cited:
- EP-A1- 0 635 781
- EP-A2- 0 451 485
- US-A- 5 742 280
- US-A- 6 081 816
- US-A1- 2004 119 762
- US-A1- 2006 073 862
- US-A1- 2007 180 400
- US-A1- 2009 319 887

## Description

This invention relates to a method and a device for displaying an object having a predetermined information content on a touch screen.

### Background of the invention

With the growing computing performance and display capabilities of mobile devices, for example mobile phones, personal digital assistants and mobile computers, a growing number of applications can be performed on these mobile devices. One of these applications is for example creating a layout of a page, for example for an email, a document, a report, a photo album or an internet page. Typically, the layout of such a page comprises several different objects, for example text, pictures, a video or an icon representing another object, for example a sound, which have to be arranged on the page. In commonly used methods such an arrangement or layouting is performed for example by first selecting an object, for example adding an image or a text, and then adjusting and positioning this object and its layout properties. However, it is difficult to create advanced visual layouts on a small screen of a mobile device, especially with a use of a finger on a touch screen of the mobile device.

For example, US 2004/0119762 A1 relates to a method of free form pasting. At least one displayed content indicated by a user is selected and a location specified by a free form user input is determined. The selected content is pasted at the specified location in accordance with the free form user input.

US 2006/0073862 A1 relates to an image generation system. This system comprises a shape recognition section which performs processing of matching an input shape input by a player using a touch panel display against a shape pattern provided in advance to recognize the input shape input by the player. The shape recognition section calculates the similarity between angle data of the input shape and angle data of the shape pattern. When the shape recognition section determines that the input shape is identical or almost identical to a specific shape pattern based on the similarity calculated, the shape recognition section determines that the input shape matches the specific shape pattern.

US 5,742,280 A relates to a handwritten graphic form inputting apparatus. When a handwritten graphic form inputted from a graphic form inputting device is recognized, a graphic form relation determination device determines the correlation between the inputted graphic form inputted and graphic form candidates. The graphic form determination device determines a most likely graphic form candidate from among the graphic form candidates in accordance with a result of a determination from the graphic form relation determination device.

EP 0 451 485 A2 relates to a form authoring toolkit for on-screen form design and filling on an interactive display. In a designer mode, on-screen forms are created and in a user mode a user may fill information in corresponding form entries on the interactive display.

US 2007/180400 relates to the launching of an application inside a user-defined area on a touch screen.

Therefore, it is an object of the present invention to provide an improved and more suitable method for creating layouts on a touch screen, especially on a small screen of a mobile device.

### Summary of the invention

According to the present invention, this object is achieved by a method for displaying an object having a predetermined information content on the touch screen as defined in claim 1 and a device as defined in claim 8. The dependent claims defined preferred and advantageous embodiments of the invention.

According to an aspect of the present invention, a method for displaying an object on a touch screen is provided. The object is an object having a predetermined information content which has to be displayed on the touch screen. According to the method a touch pattern of a user touching the touch screen is detected and based on the detected touch pattern a shape from a predetermined set of shapes is automatically selected. The object to be displayed is adapted automatically to the selected shape and the adapted object having the selected shape is displayed on the touch screen at a position where the touch pattern was detected.

Traditionally, an object to be arranged on a screen, for example a picture or a text, is first selected, then displayed on the screen, and then arranged according to the desired layout by the user, for example by resizing, trimming, reshaping or rotating the object. According to the above-described method, layouting is performed in a reversed approach by enabling the user to first select the coarse shape and position of the object to be displayed. Then, based on the touch pattern of the coarse shape an accurate shape, for example a circle, a rectangle or a square, is automatically selected. Then, the object to be displayed is automatically adapted to the selected shape and positioned on the touch screen at the position where the touch pattern was detected. This simplifies the layout process significantly as the user just has to provide the coarse shape for the object and the object is then automatically adapted and displayed according to this coarse specification.

According to an embodiment, the step of automatically selecting the shape from the predetermined set of shapes is performed by automatically selecting the shape from the predetermined set of shapes based on a best matching between the shape and the touch pattern. Therefore, different predetermined shapes can be used and can be intuitively accessed by the user.

According to another embodiment, the shape is automatically selected when a touch of the touch screen by the user is no longer detected. This may help to simplify the work flow of the layout process significantly. When the user wants to display an object on the touch screen, the user simply touches the screen and describes by moving a finger on the touch screen the coarse layout of the object to be displayed. Then the user lifts the finger from the touch screen and based on the previously made touch pattern a desired shape is automatically selected from the predetermined set of shapes. Furthermore, a selecting box providing a selection for the object to be displayed in the automatically selected shape may be opened automatically to give the user the opportunity to select the object for the previously described shape. Then the selected object is automatically adapted to the selected shape and displayed on the touch screen as described above. When adapting the object to the selected shape, the selected shape is adapted to a size and an orientation according to the touch pattern and the adapted shape is automatically displayed as a placeholder having the adapted shape on the touch screen at the position where the touch pattern was detected. The object to be displayed is then adapted to the shape. Typically for a layout, only a little number of basic shapes are necessary. Therefore, the predetermined set of shapes may comprise for example a square, a rectangle, a circle, a polygon, and a rectangular polygon. However, each of these shapes may be varied in size and rotation. Therefore, the basic shapes are automatically adapted to the size and orientation according to the touch pattern provided by the user. Therefore, a lot of different layouts can be designed by the user and only a few basic shapes have to be provided and recognized. By displaying the automatically adapted shape as a place holder on the touch screen to the user, the user gets a direct feedback of the designed shape and may redraw the shape, resize the shape, or change the orientation of the shape before selecting and automatically adapting the object to be displayed to the adapted shape.

According to an embodiment, the object is automatically adapted to the adapted shape such that the object is displayed within the placeholder on the touch screen.

This may comprise further steps, for example resizing the object, rotating the object or trimming the object.

According to an embodiment, a type of the object is selected by the user from a plurality of available object types. Furthermore, the information content of the object may be selected by the user from a plurality of available information contents. The type of the object may comprise for example a text, a picture, a video or a sound. The sound may be represented by an icon to be displayed in the layout representing the sound. Therefore, a layout of a page, for example for an email, an internet page or a photo album, can be designed and layout very easy and a lot of different objects can be arranged.

According to another aspect of the present invention a device comprising a touch screen and a processing unit is provided. The touch screen is adapted to display an object having a predetermined information content on the touch screen and to detect a touch pattern of a user touching the touch screen. The processing unit is adapted to select automatically a shape from a predetermined set of shapes based on the touch pattern, to adapt automatically the object to the selected shape, and to display the adapted object having the selected shape on the touch screen at a position where the touch pattern was detected. The device may be adapted to perform the above-described method and comprises therefore the above-described advantages.

The device may be for example a mobile phone, a personal digital assistant, a mobile navigation system, a mobile media player or a mobile computer.

Although specific features described in the above summary and the following details description are described in connection with specific embodiments, it is to be understood that the features of the embodiments described can be combined with each other unless it is noted otherwise.

### Brief description of the drawings

The invention will now be described in more detail with reference to the accompanying drawings.
Figs. 1A - 1D show a mobile device.
Figs. 2A - 2E show another embodiment of a mobile device according to the present invention.
Figs. 3A - 3E show a third embodiment of a mobile device according to the present invention.
Figs. 4A - 4C show yet another embodiment of a mobile device according to the present invention.

### Detailed description of preferred embodiments

In the following, several illustrative examples will be described in detail. It is to be understood that the following description is given only for the purpose of illustrating the principles of the invention and is not to be taken in a limiting sense. Rather, the scope of the invention is defined only by the appended claims. It is to be understood that some features of the various examples described herein may be combined with each other unless specifically noted otherwise. Same reference signs in the various instances of the drawings refer to similar or identical components.

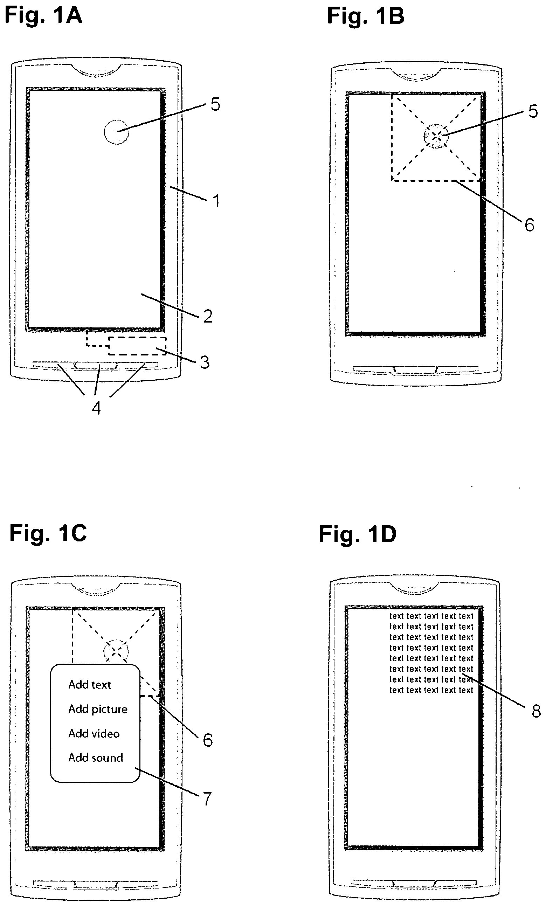

Fig. 1A shows a mobile device 1 comprising a touch screen 2 and a processing unit 3. The processing unit 3 is inside the mobile device 1 and therefore shown with dashed lines. The processing unit 3 is coupled to the touch screen 2. The mobile device 1 comprises furthermore some press buttons 4 and may comprise some more components or elements (not shown), for example a battery, a microphone, a loudspeaker, a radio frequency receiver and transmitter and so on. However, these additional components or elements are not shown to simplify matters.

The touch screen 2 is adapted to display text and graphics. Furthermore, the touch screen is adapted to detect a touch pattern of a user touching the touch screen 2. The user may touch the touch screen 2 with a finger of the user or a stylus, for example a pen. The touch screen 2 is coupled to the processing unit 3 and the processing unit 3 is adapted to receive the touch pattern detected by the touch screen 2 and to provide information to the touch screen 2 for displaying graphical or textual objects.

When the processing unit 3 is in a mode for designing a layout of a page, for example of a page of an email, a photo album or a report, the processing unit 3 displays initially for example a blank page on the touch screen 2. When the user wants to place and display an object on the page, the user simply has to touch the touch screen 2 and coarsely define a shape the object shall have on the page.

In case the user wants to add a square-shaped object, the user has to tap on the touch screen at a center point of the square and in response to this when the user no longer touches the screen, the processing unit 3 displays a default placeholder of a square with no rotation. This is shown in Figs. 1A and 1B. In Fig. 1A the user touches the touch screen 2 at the touch position 5. After releasing the touch screen 2, for example by lifting the finger, the processing unit 3 analyzes the touch pattern which is in this case a simple touch at one point of the touch screen 2. In response to this single touch pattern, a predefined default shape of a square 6 is presented around the touching point 5 as shown in Fig. 1B. Then, as shown in Fig. 1C, a selection box 7 is presented to the user on the touch screen 2 giving the user the selection to add an object of a specific type, for example a text, a picture, a video or a sound. The selection box 7 may be automatically displayed after the square-shaped placeholder is displayed on the touch screen 2 or may be displayed in response to the user touching the placeholder square 6. In the embodiment shown in Fig. 1C the user selects for example "add text" and in another step (not shown) the user may enter a text or select an object containing text content stored in the mobile device 1. After selecting the text the processing unit 3 adapts the text to the shape of the square 6. Adapting the text to the shape 6 may for example comprise a resizing of the text or reformatting of the text. Fig. 1D shows the result of the adapted text 8 displayed on the touch screen 2.

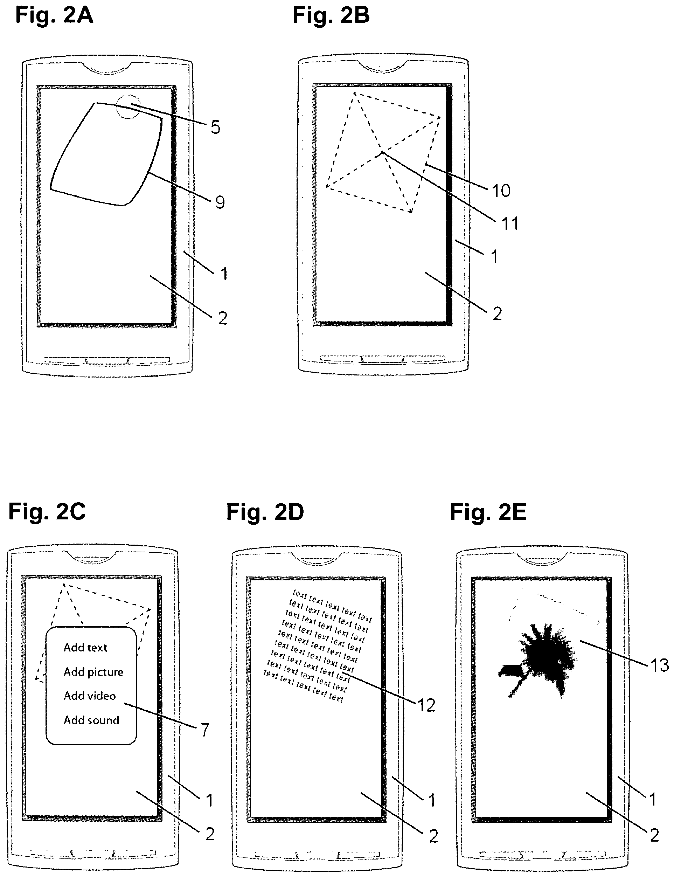

Figs. 2A - 2E show an embodiment of arranging an object on the touch screen 2. Starting from a blank page the user touches the touch screen 2 at touching point 5 and describes coarsely a circumferential line 9 of a rotated rectangle by moving the user's finger on the touch screen 2. After lifting the finger from the touch screen 2 the processing unit 3 analyzes the touch pattern 9 of the coarsely described rectangle 9 and automatically selects a shape from a predetermined set of shapes based on the touch pattern 9 and a best matching of the touch pattern 9 to one of the shapes from the predetermined set of shapes. The predetermined set of shapes may comprise for example a rectangle, a circle, a polygon and a rectangular polygon. In this case, a rectangle is identified. Furthermore, a rotation angle of the rectangle is identified. Additionally, a center point of the rectangle is automatically determined. In response, the processing unit 3 displays a placeholder 10 in form of a rotated rectangle around a center point 11. Then, as described in connection with Fig. 1C, in Fig. 2C a selection box is displayed to the user for selecting the type of object to be inserted into the placeholder 10. The user may for example select a text 12 content to be inserted into the placeholder 10. In this case, as shown in Fig. 2D, the text 12 is rotated according to the rotation angle of the shape 10. Furthermore, the text 12 may be adapted in size to match into the placeholder 10, or the placeholder 10 may be expanded automatically, e.g. at a bottom side, or it may be indicated to the user that the content is cropped so that the user can identify potential problems and resize the placeholder 10 manually. Alternatively, the user may select adding a picture 13 as the content to be inserted into the placeholder 10. Fig. 2E shows the result. The picture 13 is also rotated according to the rotation of the placeholder 10 and additionally the picture 13 is resized to fit into the shape 10. If necessary, the picture 13 is also trimmed to the size of the placeholder 10.

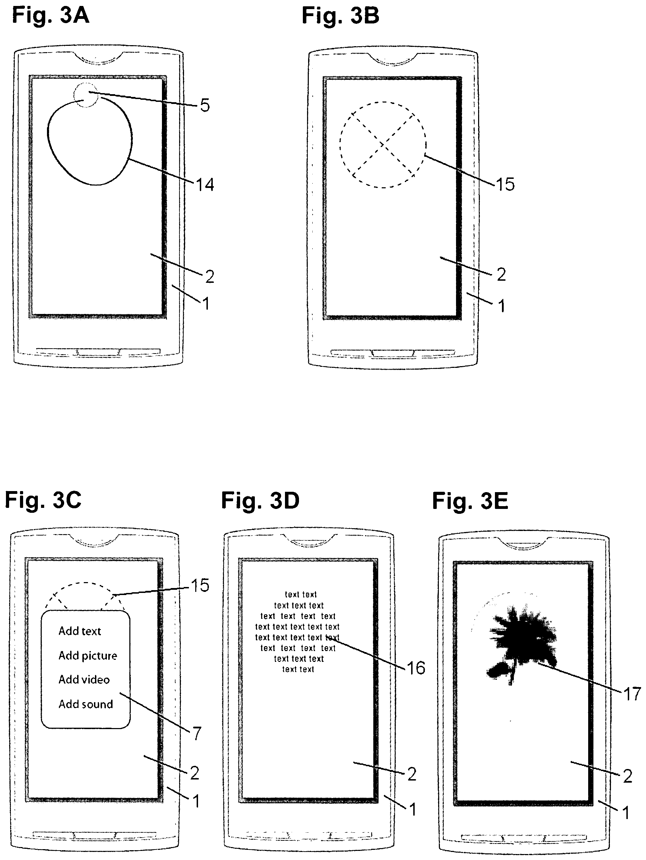

Figs. 3A - 3E show another example of another kind of shape for an object the user wants to display on the touch screen 2. As shown in Fig. 3A, the user draws coarsely a circle where the user wants to place an object in a circle form. Starting from touching point 5 the user describes coarsely a circle 14. The processing unit 3 automatically selects a circle shape 15 from the predetermined set of shapes and adapts the shape to the size and position of the coarsely drawn circle 14 from the user. The result is shown in Fig. 3B as a placeholder 15 having a circular shape. As described above in connection with Fig. 2C, the user may add a text, a picture, a video or a sound to the placeholder 15. In case the user adds a text 16 to the placeholder 15, the result is shown in Fig. 3D. The text 16 is rearranged such that the text 16 is displayed within the placeholder 15 on the touch screen 2. Therefore, a new word wrapping of the text 16 may be necessary, or the text 16 may be adapted to the placeholder 15 by other visual effects, for example a fish eye lens effect or other circular alignment effects. Alternatively, the user may select to add a picture 17 as shown in Fig. 3E. The picture 17 is automatically adapted by the processing unit 3 to the shape 15 such that the picture 17 is displayed within the placeholder 15 on the touch screen 2.

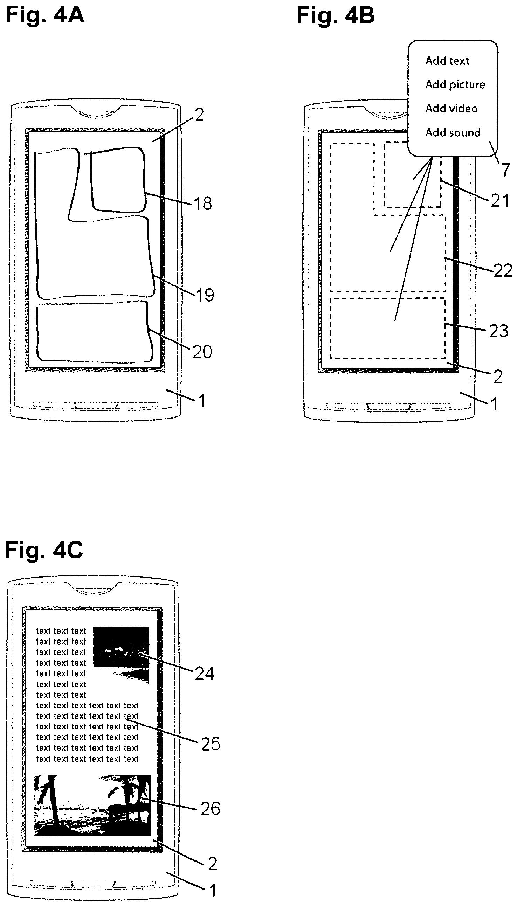

Figs. 4A - 4C show another example of adding objects to a layout on the touch screen 2. In this example, as shown in Fig. 4A, the user defines three layout elements coarsely as placeholders for three different objects. First, the user describes a rectangular 18, then the user describes a polygon 19, and then the user describes a rectangular 20. In response to each of the touching patterns the processing unit 3 selects an appropriate shape from a predetermined set of shapes, in this case a rectangular 21 corresponding to the user's rectangular 18, a polygon 22 corresponding to the user's polygon 19, and a rectangular 23 corresponding to the user's rectangular 20. The rectangulars 21 and 23 and the polygon 22 are adapted in size and position to the touching patterns 18-20 provided by the user and are displayed as placeholders 21-23 on the touch screen 2 as shown in Fig. 4B. Then objects are added to each of the placeholders 21-23. This may be accomplished by touching sequentially each of the placeholders 21-23 and selecting for each of the placeholders 21-23 a corresponding object, or the objects may be selected immediately after the user has coarsely defined the shape of each of the placeholders. After the objects have been added in step 4B, the objects are adapted automatically by the processing unit 3 to the placeholder shapes 21-23. Fig. 4C shows the result. A picture 24 was added to placeholder 21, a text 25 was added to placeholder 22, and another picture 26 was added to placeholder 23.

While exemplary embodiments have been described above, various modifications may be implemented in other embodiments. For example, further shapes in the predetermined set of shapes may be provided, for example a triangle and an ellipse.

## Claims

1. A method for displaying an object having a predetermined information content on a touch screen, the method comprising the steps of:
- detecting a touch pattern (5; 9; 14; 18-20) of a user touching the touch screen (2),
- automatically selecting a shape (6; 10; 15; 21-23) from a predetermined set of shapes based on the touch pattern (5; 9; 14; 18-20),
- automatically adapting the selected shape (6; 10; 15; 21-23) to a size and orientation according to the touch pattern (5; 9; 14; 18-20),
- automatically displaying a placeholder (6; 10; 15; 21-23) having the adapted shape (6; 10; 15; 21-23) on the touch screen (2) at the position where the touch pattern (5; 9; 14; 18-20) was detected,
- adapting the object (8; 12, 13; 16, 17; 24-26) to be displayed to the adapted shape (6; 10; 15; 21-23), and
- displaying the adapted object (8; 12, 13; 16, 17; 24-26) having the selected shape (6; 10; 15; 21-23) on the touch screen (2) at the position where the touch pattern (5; 9; 14; 18-20) was detected.

2. The method according to claim 1, wherein the step of automatically selecting the shape (6; 10; 15; 21-23) from the predetermined set of shapes comprises automatically selecting the shape (6; 10; 15; 21-23) from the predetermined set of shapes based on a best matching between the shape (6; 10; 15; 21-23) and the touch pattern (5; 9; 14; 18-20).

3. The method according to claim 1 or 2, wherein the shape (6; 10; 15; 21-23) is automatically selected when no longer a touch of the touch screen (2) by the user is detected.

4. The method according to any one of the preceding claims, wherein the object (8; 12, 13; 16, 17; 24-26) is automatically adapted to the adapted shape (6; 10; 15; 21-23) such that, in the step of displaying the object (8; 12, 13; 16, 17; 24-26), the object (8; 12, 13; 16, 17; 24-26) is displayed within the placeholder (6; 10; 15; 21-23) on the touch screen (2).

5. The method according to any of the preceding claims, further comprising a step of selecting a type of the object (8; 12, 13; 16, 17; 24-26) and/or the information content of the object (8; 12, 13; 16, 17; 24-26) by the user from a plurality of available object types and information contents, respectively.

6. The method according to claim 5, wherein the type of the object (8; 12, 13; 16, 17; 24-26) comprises a type selected from the group comprising text (8; 12; 16; 25), a picture (13; 17; 24, 26), a video, and a sound.

7. The method according to any of the preceding claims, wherein the predetermined set of shapes comprises shapes selected from the group comprising a square (6), a rectangle (11; 21, 23), a circle (15), a polygon, and a rectangular polygon (22).

8. A device, comprising:
a touch screen (2) adapted to display an object (8; 12, 13; 16, 17; 24-26) having a predetermined information content thereon and to detect a touch pattern (5; 9; 14; 18-20) of a user touching the touch screen (2), and
a processing unit (3) adapted
- to automatically select a shape (6; 10; 15; 21-23) from a predetermined set of shapes based on the touch pattern (5; 9; 14; 18-20),
- to adapt the selected shape (6; 10; 15; 21-23) to a size and orientation according to the touch pattern (5; 9; 14; 18-20),
- to display a placeholder (6; 10; 15; 21-23) having the adapted shape (6; 10; 15; 21-23) on the touch screen (2) at the position where the touch pattern (5; 9; 14; 18-20) was detected,
- to adapt the object (8; 12, 13; 16, 17; 24-26) to be displayed to the adapted shape (6; 10; 15; 21-23), and
- to display the adapted object (8; 12, 13; 16, 17; 24-26) having the selected shape (6; 10; 15; 21-23) on the touch screen (2) at the position where the touch pattern (5; 9; 14; 18-20) was detected.

9. The device according to claim 8, wherein the device (1) comprises a device selected from the group comprising a mobile phone, a personal digital assistant, a mobile navigation system, a mobile media player, and a mobile computer.

## Patentansprüche

1. Verfahren zum Anzeigen eines Objekts, welches einen vorgegebenen Informationsinhalt aufweist, auf einem Berührungsbildschirm, wobei das Verfahren die Schritte umfasst:
- Erfassen eines Berührungsmusters (5; 9; 14; 18-20) eines Benutzers, welcher den Berührungsbildschirm (2) berührt,
- automatisches Auswählen einer Form (6; 10; 15; 21-23) aus einer vorgegebenen Gruppe von Formen basierend auf dem Berührungsmuster (5; 9; 14; 18-20),
- automatisches Anpassen der ausgewählten Form (6; 10; 15; 21-23) auf eine Größe und Ausrichtung gemäß dem Berührungsmuster (5; 9; 14; 18-20),
- automatisches Anzeigen eines Platzhalters (6; 10; 15; 21-23), welcher die angepasste Form (6; 10; 15; 21-23) aufweist, auf dem Berührungsbildschirm (2) an der Position, wo das Berührungsmuster (5; 9; 14; 18-20) erfasst wurde,
- Anpassen des anzuzeigenden Objekts (8; 12, 13; 16, 17; 24-26) an die angepasste Form (6; 10; 15; 21-23), und
- Anzeigen des angepassten Objekts (8; 12, 13; 16, 17; 24-26), welches die ausgewählte Form (6; 10; 15; 21-23) aufweist, auf dem Berührungsbildschirm (2) an der Position, wo das Berührungsmuster (5; 9; 14; 18-20) erfasst wurde.

2. Verfahren nach Anspruch 1, wobei der Schritt des automatischen Auswählens der Form (6; 10; 15; 21-23) aus der vorgegebenen Gruppe von Formen ein automatisches Auswählen der Form (6; 10; 15; 21-23) aus der vorgegebenen Gruppe von Formen basierend auf einer besten Übereinstimmung zwischen der Form (6; 10; 15; 21-23) und dem Berührungsmuster (5; 9; 14; 18-20) umfasst.

3. Verfahren nach Anspruch 1 oder 2, wobei die Form (6; 10; 15; 21-23) automatisch ausgewählt wird, wenn eine Berührung des Berührungsbildschirms (2) durch den Benutzer nicht mehr erfasst wird.

4. Verfahren nach einem der vorhergehenden Ansprüche, wobei das Objekt (8; 12, 13; 16, 17; 24-26) automatisch an die angepasste Form (6; 10; 15; 21-23) derart angepasst wird, dass in dem Schritt des Anzeigens des Objekts (8; 12, 13; 16, 17; 24-26) das Objekt (8; 12, 13; 16, 17; 24-26) innerhalb des Platzhalters (6; 10; 15; 21-23) auf dem Berührungsbildschirm (2) angezeigt wird.

5. Verfahren nach einem der vorhergehenden Ansprüche, ferner umfassend einen Schritt eines Auswählens eines Typs des Objekts (8; 12, 13; 16, 17; 24-26) und/oder des Informationsinhalts des Objekts (8; 12, 13; 16, 17; 24-26) durch den Benutzer aus mehreren verfügbaren Objekttypen bzw. Informationsinhalten.

6. Verfahren nach Anspruch 5, wobei der Typ des Objekts (8; 12, 13; 16, 17; 24-26) einen Typ umfasst, welcher aus der Gruppe ausgewählt ist, welche Text (8; 12; 16; 25), ein Bild (13; 17; 24, 26), ein Video und einen Ton umfasst.

7. Verfahren nach einem der vorhergehenden Ansprüche, wobei die vorgegebene Gruppe von Formen Formen umfasst, welche aus der Gruppe ausgewählt sind, welche ein Quadrat (6), ein Rechteck (11; 21, 23), einen Kreis (15), ein Polygon und ein rechteckiges Polygon (22) umfasst.

8. Vorrichtung umfassend:
einen Berührungsbildschirm (2), welcher ausgestaltet ist, ein Objekt (8; 12, 13; 16, 17; 24-26) mit einem vorgegebenen Informationsinhalt darauf anzuzeigen und ein Berührungsmuster (5; 9; 14; 18-20) von einer Benutzerberührung des Berührungsbildschirms (2) zu erfassen, und
eine Verarbeitungseinheit (3), welche ausgestaltet ist,
- automatisch eine Form (6; 10; 15; 21-23) aus einer vorgegebenen Gruppe von Formen basierend auf dem Berührungsmuster (5; 9; 14; 18-20) auszuwählen,
- die ausgewählte Form (6; 10; 15; 21-23) auf eine Größe und Ausrichtung gemäß dem Berührungsmuster (5; 9; 14; 18-20) anzupassen,
- einen Platzhalter (6; 10; 15; 21-23), welcher die angepasste Form (6; 10; 15; 21-23) aufweist, auf dem Berührungsbildschirm (2) an der Position, wo das Berührungsmuster (5; 9; 14; 18-20) erfasst wurde, anzuzeigen,
- das anzuzeigende Objekt (8; 12, 13; 16, 17; 24-26) an die angepasste Form (6; 10; 15; 21-23) anzupassen, und
- das angepasste Objekt (8; 12, 13; 16, 17; 24-26), welches die ausgewählte Form (6; 10; 15; 21-23) aufweist, auf dem Berührungsbildschirm (2) an der Position anzuzeigen, wo das Berührungsmuster (5; 9; 14; 18-20) erfasst wurde.

9. Vorrichtung nach Anspruch 8, wobei die Vorrichtung (1) eine Vorrichtung umfasst, welche ausgewählt ist aus der Gruppe, welche ein Mobilfunktelefon, einen persönlichen digitalen Assistenten, ein mobiles Navigationssystem, eine mobile Medienabspielvorrichtung und einen mobilen Computer umfasst.

## Revendications

1. Procédé d'affichage d'un objet ayant un contenu d'informations prédéterminé sur un écran tactile, le procédé comprenant les étapes qui consistent :
- à détecter un motif tactile (5 ; 9 ; 14 ; 18-20) d'un utilisateur touchant l'écran tactile (2),
- à sélectionner automatiquement une forme (6 ; 10 ; 15 ; 21-23) à partir d'un ensemble prédéterminé de formes sur la base du motif tactile (5 ; 9 ; 14 ; 18-20),
- à adapter automatiquement la forme sélectionnée (6 ; 10 ; 15 ; 21-23) à une taille et à une orientation selon le motif tactile (5 ; 9 ; 14 ; 18-20),
- à afficher automatiquement un paramètre fictif (6 ; 10 ; 15 ; 21-23) ayant la forme adaptée (6 ; 10 ; 15 ; 21-23) sur l'écran tactile (2) à la position où le motif tactile (5 ; 9 ; 14 ; 18-20) a été détecté,
- à adapter l'objet (8 ; 12, 13 ; 16, 17 ; 24-26) à afficher à la forme adaptée (6 ; 10 ; 15 ; 21-23), et
- à afficher l'objet adapté (8 ; 12, 13 ; 16, 17, 24-26) ayant la forme sélectionnée (6 ; 10 ; 15 ; 21-23) sur l'écran tactile (2) à la position où le motif tactile (5 ; 9 ; 14 ; 18-20) a été détecté.

2. Procédé selon la revendication 1, dans lequel l'étape de sélection automatique de la forme (6 ; 10 ; 15 ; 21-23) à partir de l'ensemble prédéterminé de formes comprend la sélection automatique de la forme (6 ; 10 ; 15 ; 21-23) à partir de l'ensemble prédéterminé de formes sur la base d'une meilleure correspondance entre la forme (6 ; 10 ; 15 ; 21-23) et le motif tactile (5 ; 9 ; 14 ; 18-20) .

3. Procédé selon la revendication 1 ou 2, dans lequel la forme (6 ; 10 ; 15 ; 21-23) est automatiquement sélectionnée lorsqu'un contact sur l'écran tactile (2) effectué par l'utilisateur n'est plus détecté.

4. Procédé selon l'une quelconque des revendications précédentes, dans lequel l'objet (8 ; 12, 13 ; 16, 17 ; 24-26) est automatiquement adapté à la forme adaptée (6 ; 10 ; 15 ; 21-23) de sorte que, dans l'étape d'affichage de l'objet (8 ; 12, 13 ; 16, 17 ; 24-26), l'objet (8 ; 12, 13 ; 16, 17 ; 24-26) soit affiché dans le paramètre fictif (6 ; 10 ; 15 ; 21-23) sur l'écran tactile (2).

5. Procédé selon l'une des revendications précédentes, comprenant en outre une étape de sélection d'un type de l'objet (8 ; 12, 13 ; 16, 17 ; 24-26) et/ou du contenu d'informations de l'objet (8 ; 12, 13 ; 16, 17 ; 24-26) par l'utilisateur à partir d'une pluralité de types d'objets et de contenus d'informations disponibles, respectivement.

6. Procédé selon la revendication 5, dans lequel le type de l'objet (8 ; 12, 13 ; 16, 17 ; 24-26) comprend un type sélectionné dans le groupe comprenant un texte (8 ; 12 ; 16 ; 25), une image (13 ; 17 ; 24, 26), une vidéo, et un son.

7. Procédé selon l'une des revendications précédentes, dans lequel l'ensemble prédéterminé de formes comprend des formes sélectionnées dans le groupe comprenant un carré (6), un rectangle (11 ; 21, 23), un cercle (15), un polygone, et un polygone rectangulaire (22).

8. Dispositif, comprenant :
un écran tactile (2) adapté pour afficher un objet (8 ; 12, 13 ; 16, 17 ; 24-26) ayant un contenu d'informations prédéterminé sur celui-ci et pour détecter un motif tactile (5 ; 9 ; 14 ; 18-20) d'un utilisateur touchant l'écran tactile (2), et
une unité de traitement (3) conçue
- pour sélectionner automatiquement une forme (6 ; 10 ; 15 ; 21-23) à partir d'un ensemble prédéterminé de formes sur la base du motif tactile (5 ; 9 ; 14 ; 18-20),
- pour adapter la forme sélectionnée (6 ; 10 ; 15 ; 21-23) à une taille et à une orientation selon le motif tactile (5 ; 9 ; 14 ; 18-20),
- pour afficher un paramètre fictif (6 ; 10 ; 15 ; 21-23) ayant la forme adaptée (6 ; 10 ; 15 ; 21-23) sur l'écran tactile (2) à la position où le motif tactile (5 ; 9 ; 14 ; 18-20) a été détecté,
- pour adapter l'objet (8 ; 12, 13 ; 16, 17 ; 24-26) à afficher à la forme adaptée (6 ; 10 ; 15 ; 21-23), et
- pour afficher l'objet adapté (8 ; 12, 13 ; 16, 17 ; 24-26) ayant la forme sélectionnée (6 ; 10 ; 15 ; 21-23) sur l'écran tactile (2) à la position où le motif tactile (5 ; 9 ; 14 ; 18-20) a été détecté.

9. Dispositif selon la revendication 8, le dispositif (1) consistant en un dispositif sélectionné dans le groupe comprenant un téléphone mobile, un assistant numérique personnel, un système de navigation mobile, un lecteur multimédia mobile, et un ordinateur nomade.
